# EUROPEAN PATENT APPLICATION

(11) **EP 3 913 755 A1**
(43) Date of publication of application: **24.11.2021**
(21) Application number: 21173048.6
(22) Date of filing: 10.05.2021
(51) Int. Cl.: H02B 11/10, H02B 11/12

(54) **A SWITCHGEAR ASSEMBLY**

(30) Priority: 18.05.2020 IN 202041020846
(71) Applicant: ABB Schweiz AG, 5400 Baden (CH)
(72) Inventor: Sonone, Ujval Ramkrishna, 422010 Nashik (IN); Pan, Abhijit, 422012 Nashik (IN)
(74) Representative: Zimmermann & Partner Patentanwälte mbB

(57) **Abstract**

A switchgear assembly (100) is disclosed. The switchgear assembly (100) includes a switchgear panel (102) having a housing (104) defining a display window (140) and a bracket (166) pivotably coupled to the housing (104) and having a first marking (162) and a second marking (164). The switchgear assembly (100) further includes a circuit breaker (110) adapted to be slidably received inside the housing (104) and including an engagement structure (196) adapted to engage with bracket (166) and pivot the bracket (166) to a first position and to a second position in response an insertion and sliding of the circuit breaker (110) inside the housing (104). In the first position, the first marking (162) is displayed through the display window (140) indicating a test position of the circuit breaker (110), while, in the second position, the second marking (164) is displayed through the display window (140) indicating a service position of the circuit breaker (110).

## Description

### FIELD OF THE INVENTION

The present disclosure relates, generally, to a switchgear assembly having a circuit breaker, and more particularly relates to a switchgear assembly having an indicator assembly for indicating a test position or a service position of a circuit breaker of the switchgear assembly.

### BACKGROUND OF THE INVENTION

Switchgear assemblies generally include one or more circuit breakers to facilitate a selective disconnection of electricity consuming units from an electricity supply unit. The installation of circuit breakers in switchboard is generally of two types - stationary installation and draw out type installation. In the stationary installation, circuit breakers are mounted to a frame of the switchboard so that terminal electrical connection effected via bolted joints. In such stationary installations, inspection and maintenance of the circuit breaker is difficult and quite hazardous if attempted while the switchboard is live.

In draw out type installations, the circuit breaker apparatus are typically installed or removed from the frame by racking the circuit breaker between an extended position, for example, a service position and a test position, to as well out of an enclosure compartment (i.e. a removed position). In an engaged position (i.e. the service position), the circuit breaker is disposed within the compartment where the load current carrying primary disconnect contacts or main contacts of the circuit breaker and associated switchboard panel are fully engaged. As circuit breakers for industrial applications are typically equipped with a variety of accessorial functions, it is common practice to provide the test position for the circuit breaker in which the primary contacts or main contacts are separated, but secondary or auxiliary contacts are still engaged to test the accessorial functions in safety.

In draw out type circuit breakers, it is important that an operator of a switchgear assembly having the draw out type circuit breaker be aware of the position of the circuit breaker for his own safety as well as that of the equipment.

### OBJECTS OF THE INVENTION

The principal object of the present invention is to provide for a switchgear assembly that includes a bracket adapted to pivot between a first position and a second position and displays one of plurality of markings to indicate a test position or a service position of the circuit breaker.

Another object of the invention is to provide an indicating mechanism for a switchgear assembly that is cost efficient and simplistic in structure.

### BRIEF SUMMARY/STATEMENT OF THE INVENTION

The present disclosure provides a switchgear assembly that include a bracket adapted to pivot between a first position and a second position in response to an insertion of a circuit breaker inside a housing of the switchgear assembly, and display one of plurality of markings to indicate a test position or a service position of the circuit breaker.

Embodiments of the disclosure provide a switchgear assembly having a switchgear panel and a circuit breaker. The switchgear panel includes a housing defining a display window and a bracket disposed inside the housing and pivotably coupled to the housing. The bracket includes a first marking and a second marking. Further, the circuit breaker is adapted to be slidably received inside the housing and includes an engagement structure adapted to engage with bracket. The engagement structure pivots the bracket to the first position upon an insertion of the circuit breaker inside the housing and to the second position in response to the subsequent insertion and sliding of the circuit breaker inside the housing. In the first position, the first marking is displayed through the display window indicating a test position of the circuit breaker, while in the second position, the second marking is displayed through the display window indicating a service position of the circuit breaker.

In accordance with the embodiment, the bracket includes a substantially convex edge adapted to engage with the engagement structure. The bracket pivots towards the second position in response to a movement of the engagement structure along the convex edge in a lateral direction.

In accordance with the embodiment, the engagement structure includes a roller.

In accordance with an embodiment, the bracket includes a protrusion adapted to engage with a wall of the housing to restrict a movement of the bracket in a second direction. In the second direction the bracket moves towards the first position from the second position.

In accordance with an embodiment, the protrusion is disposed proximate to a first longitudinal end of the bracket.

In accordance with an embodiment, the first marking is disposed proximate to a roof of the housing relative the second marking.

In accordance with an embodiment, the switchgear assembly further includes a guide member attached to the housing and adapted to guide the movement of the bracket.

In accordance with an embodiment, the guide member is an inverted U-shaped bracket having a first elongated plate defining a first slot and a second elongated plate disposed substantially parallel to the first elongated plate and defining a second slot. The first slot and the second slot receive a portion of the bracket to guide the movement of the bracket.

In accordance with an embodiment, the circuit breaker is vacuum circuit breaker.

### BRIEF DESCRIPTION OF THE ACCOMPANYING DRAWINGS

Having thus described example embodiments of the present disclosure in general terms, reference will now be made to the accompanying drawings, which are not necessarily drawn to scale, and wherein:
FIG. 1 illustrates a perspective view of an exemplary switchgear assembly, in accordance with an embodiment of the disclosure;
FIG. 2 illustrates a side cross-section view of the switchgear assembly of FIG. 1 depicting a circuit breaker disposed inside a housing, in accordance with an embodiment of the disclosure;
FIG. 3 illustrates a front view of the switchgear assembly of FIG, 1 depicting the circuit breaker disposed inside the housing with removed main door, in accordance with an embodiment of the disclosure;
FIG. 4 illustrates a perspective view of an indicator assembly having bracket pivotally coupled to an intermediate wall of the housing of FIG. 1, in accordance with an embodiment of the disclosure;
FIG. 5 illustrates a perspective view of the indicator assembly of the switchgear assembly depicting the bracket at a first position and in engagement with an engagement structure, in accordance with an embodiment of the disclosure;
FIG. 6 illustrates a perspective view of the indicator assembly of the switchgear assembly depicting the bracket at a second position and in engagement with the engagement structure, in accordance with an embodiment of the disclosure;
FIG. 7 illustrates a perspective view of the indicator assembly of the switchgear assembly depicting the bracket having a protrusion adapted to contact the intermediate wall to restrict a movement of the bracket in a downward direction, in accordance with an embodiment of the disclosure;
FIG. 8 illustrates a perspective view of the circuit breaker of FIG. 2 depicting the engagement structure disposed on an upper end of a frame of the circuit breaker, in accordance with an embodiment of the disclosure; and
FIG. 9 illustrates an enlarged view of an upper portion of the circuit breaker of FIG. 8 depicting the engagement structure having a roller, in accordance with an embodiment of the disclosure.

### DETAILED DISCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, apparatus and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. The, use of any term should not be taken to limit the spirit and scope of embodiments of the present invention.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

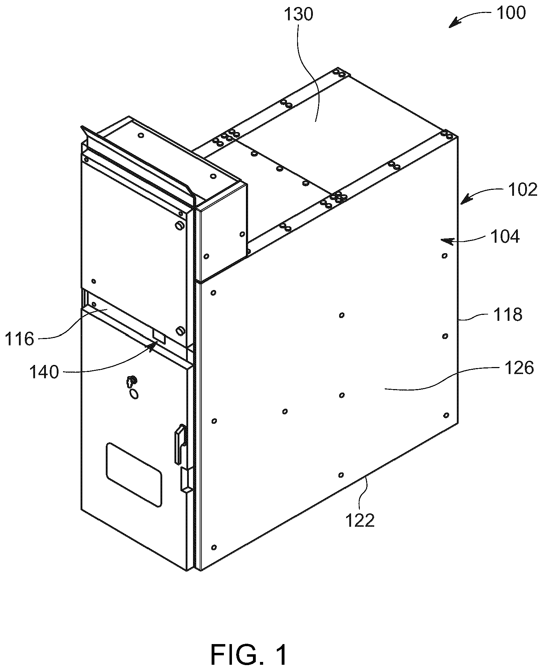

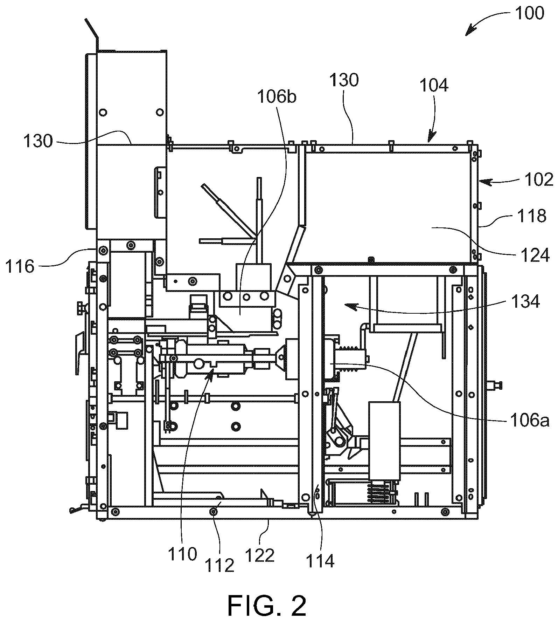

Referring to FIGS. 1, 2, and 3, an exemplary switchgear assembly 100 suitable for protecting one or more electrical equipment is shown. In an exemplary embodiment, the switchgear assembly 100 may be a medium voltage switchgear assembly, and may include a switchgear panel 102 having a housing 104, main contacts 106a, 106b (shown in FIG. 2) disposed inside the housing 104, and a circuit breaker 110 removably and slidably disposed inside the housing 104. In an embodiment, the circuit breaker 110 may be a vacuum circuit breaker. Although a vacuum circuit breaker is contemplated, it may be envisioned that any other suitable circuit breaker, such as, but not limited to, an arc type circuit breaker, an air circuit breaker, an oil circuit breaker or any other circuit breaker in known in the art.

The circuit breaker 110 is a draw out type apparatus and is adapted to slide inside housing 104 between a service position and a disengaged position. In between the disengaged position and the service position, the circuit breaker 110 is adapted to be located to a test position. In the test position, secondary contacts (not shown) of the circuit breaker 110 are engaged, and hence the circuit breaker 110 is in electrical contact with the main contacts 106a, 106b, while primary disconnect contacts are disengaged from the main contacts 106a, 106b. Accordingly, in the test position, electricity may be conducted/provided to various accessories of the circuit breaker 110 along with a controller of the circuit breaker 110 to facilitate a test of proper functioning of the circuit breaker 110. In the disengaged position, the circuit breaker 110 may be disposed within the housing 104 such that the primary disconnect contacts and the secondary contacts are disengaged from the main contacts 106a, 106b. Further, in the service position, both the primary disconnect contacts and the secondary contacts are engaged with main contacts 106a, 106b, enabling a complete functioning of the switchgear assembly 100. To facilitate the sliding of the circuit breaker 110 inside the housing 104, the housing 104 may include a pair of guide rails 112 extending from a front wall 116 of the housing 104 towards a partition wall 114 or a rear wall 118 of the housing 104.

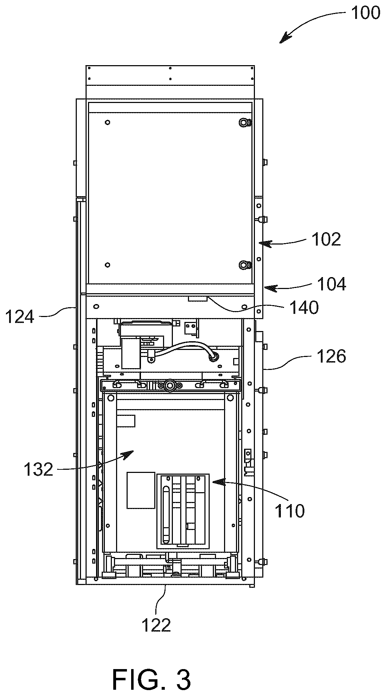

As shown, the housing 104 may include a base 122 having the plurality of guide rails 112 disposed spaced apart and substantially parallel to each other, a plurality of walls, for example, the front wall 116, the rear wall 118, a first sidewall 124, and a second sidewall 126, extending substantially perpendicularly relative to the base 122, and a roof 130 supported on the plurality of walls 116, 118, 124, 126. The front wall 116 extends between the first sidewall 124 and the second sidewall 126, and defines an opening 132 (shown in FIG. 3) to facilitate an entry of the circuit breaker 110 inside the housing 104 and an exit of the circuit breaker 110 from the housing 104. The rear wall 118 also extends between the first sidewall 124 and the second sidewall 126, and is disposed spaced apart and substantially parallel to the front wall 116. In this manner, the first sidewall 124, the second sidewall 126, the rear wall 118, and the front wall 116 together define an elongated channel 134 (shown in FIG. 2) to slidably receive the circuit breaker 110. Also, the housing 104 may include the partition wall 114 disposed inside the elongated channel 134, and extending from the base 122 towards the roof 130. The partition wall 114 may extend substantially parallel to the front wall 116 and the rear wall 118, and may extend from the first sidewall 124 to the second sidewall 126. Accordingly, the partition wall 114 bifurcates the elongated channel 134 into two channels. In such a case, the guide rails 112 extend from the front wall 116 to the partition wall 114.

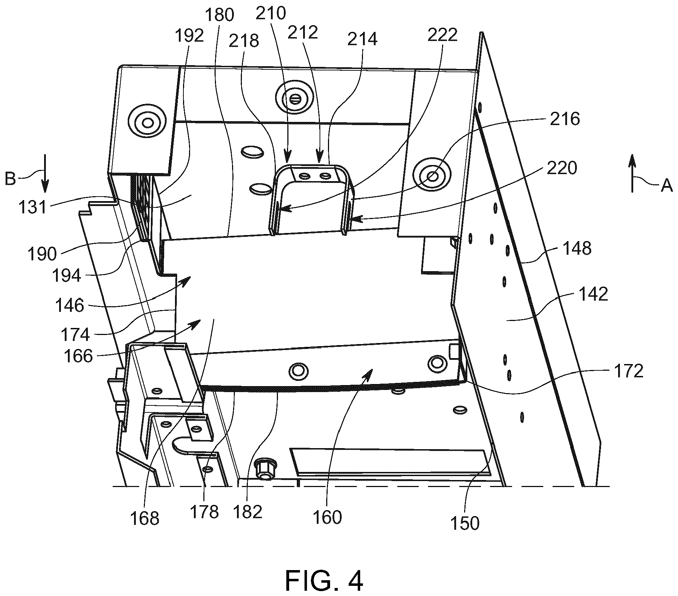

Further, the front wall 116 defines a display window 140 (shown in FIG. 1) for displaying an indication corresponding to a position of the circuit breaker 110 inside the housing 104. Further, referring to FIG. 4, the housing 104 includes an intermediate wall 142 disposed inside housing 104 and extending downwardly from an intermediate roof plate 131 or the roof 130 to define a first chamber 146 inside the housing 104. As shown, the intermediate roof plate 131 extends from the front wall 116 inside the housing 104 and may be disposed substantially parallel to the roof 130. Further, the intermediate wall 142 may be disposed spaced apart from both the front wall 116 and the partition wall 114 and may connect the first sidewall 124 to the second wall 126. Also, a longitudinal end 148 of the intermediate wall 142 may be connected to the intermediate roof plate 131 or the roof 130, while other longitudinal end 150 of the intermediate wall 142 is a free end, which is located proximate to the intermediate roof plate 131 relative to the base 122. Moreover, the intermediate wall 142 is disposed proximate to the front wall 116 relative to the partition wall 114. The first chamber 146 is adapted to receive one or more components of an indicator assembly 160 of the switchgear assembly 100.

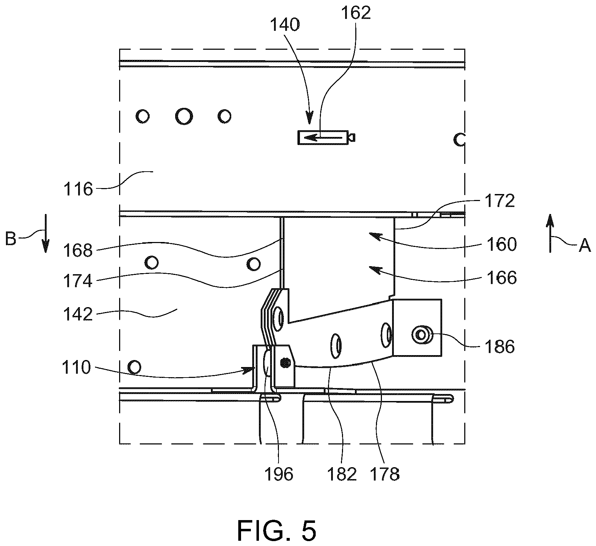

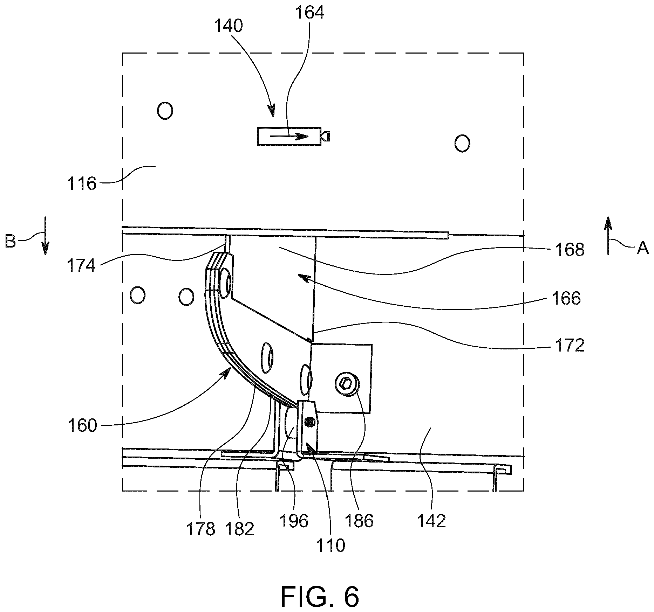

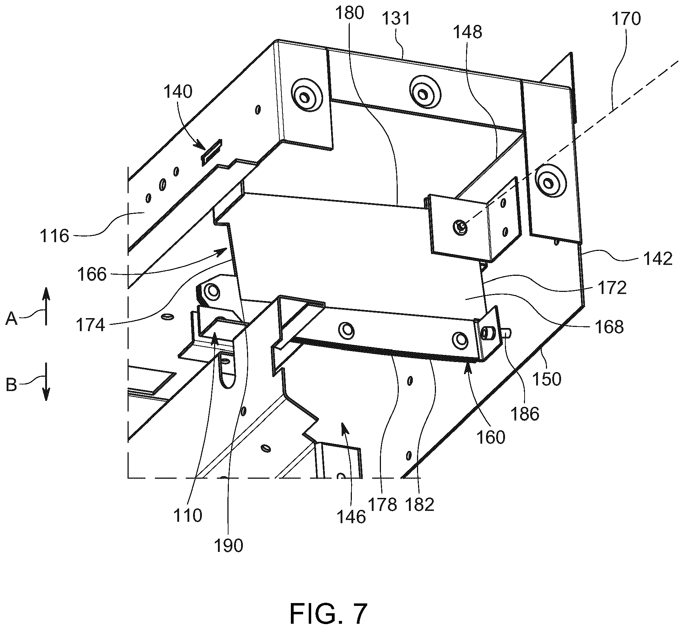

Referring to FIG. 4, FIG. 5, and FIG. 6, the indicator assembly 160 includes a plurality of markings, for example, a first marking 162 (shown in FIG. 5) and a second marking 164 (shown in FIG. 6), to indicate a plurality of positions, for example, the test position and the service position, of the circuit breaker 110 inside the housing 104. The indicator assembly 160 further includes a bracket 166 disposed inside the housing 104 and pivotably coupled to the housing 104. As shown, the bracket 166 is disposed inside the first chamber 146 and is pivotally coupled to the intermediate wall 142. In an exemplary embodiment, the bracket 166 includes a plate 168 pivotally coupled to the intermediate wall 142 about a pivot axis 170 (best shown in FIG. 7). As shown in FIG. 7, the pivot axis 170 extends substantially parallel to the intermediate wall 142 and is substantially perpendicular to the first sidewall 124 and the second sidewall 126, while the plate 168 extends substantially perpendicular to the intermediate wall 142 and is disposed substantially parallel to first sidewall 124 and the second sidewall 126. The plate 168 is disposed inside the first chamber 146 and may include a first lateral end 172 disposed proximate to the intermediate wall 142, a second lateral end 174 disposed proximate to the front wall 116, a first longitudinal end 178 disposed distally from the roof 130 and located proximate to the free end 150 of the intermediate wall 142, and a second longitudinal end 180 disposed proximate to the roof 130. The plate 168 is pivotally coupled to the intermediate wall 142 at a location proximate to the second longitudinal end 180 and the first lateral end 172. Further, the first longitudinal end 178 of the plate 168 defines an edge 182 having a substantially convex shape and adapted to contact the circuit breaker 110. It may be appreciated that the plate 168, and hence the bracket 166, moves in a first direction 'A' (i.e. upwardly and towards the roof 130) in response to an engagement of the plate with the circuit bracket and a movement/insertion of the circuit breaker 110 inside the housing 104 towards the rear wall 118. In an embodiment, the edge 182 includes a half convex shape.

Additionally, or optionally, again referring to FIG. 7, the bracket 166 may include a protrusion 186 extending outwardly of the plate 168 and disposed proximate to a lateral end, for example, the first lateral end 172, of the plate 168 and the located proximate to the first longitudinal end 178. The protrusion 186 is adapted to engage with a wall, for example, the intermediate wall 142, of the housing 104 when the bracket 166 (i.e. the plate 168) moves downwardly (i.e. in a second direction 'B') under gravity from the second position towards the first position. Owing to the contact of the protrusion 186 with the intermediate wall 142, the movement of bracket 166 (i.e. the plate 168) is restricted or stopped when the bracket 166 moves/falls downwardly towards the first position under gravity.

Additionally, the bracket 166 may include an indicator plate 190 (best shown in FIG. 4) disposed proximate to the second longitudinal end 180 and extending substantially perpendicularly from the second lateral end 174. As shown, the indicator plate 190 may extend substantially parallel to the front wall 116, and may include the plurality of markings, for example, the first marking 162 (shown in FIG. 5) and the second marking 164 (shown in FIG. 6). The first marking 162 may be disposed proximate to an upper end 192 of the indicator plate 190, while the second marking 164 may be disposed proximate to a lower end 194 of the indicator plate 190 relative to the first marking 162. The first marking 162 is adapted to be seen by an operator through the display window 140 when the bracket 166 is disposed at the first position indicating that the circuit breaker 110 is disposed at the test position inside the housing 104, while the second marking 164 is adapted to be seen by an operator through the display window 140 when the bracket 166 is disposed at the second position indicating that the circuit breaker 110 is disposed at the service position inside the housing 104. The bracket 166 moves to the first position upon an engagement of the circuit breaker 110 with the first longitudinal end 178 and moves to the second position due to the pivotal movement (i.e. a lifting) of the bracket 166 caused by the sliding of the circuit breaker 110 along and in abutment to the convex edge 182. In an embodiment, the first marking 162 may be a color marking having a first color, for example a red color, while the second marking 164 may include a second color, for example, a blue color, different from the first color.

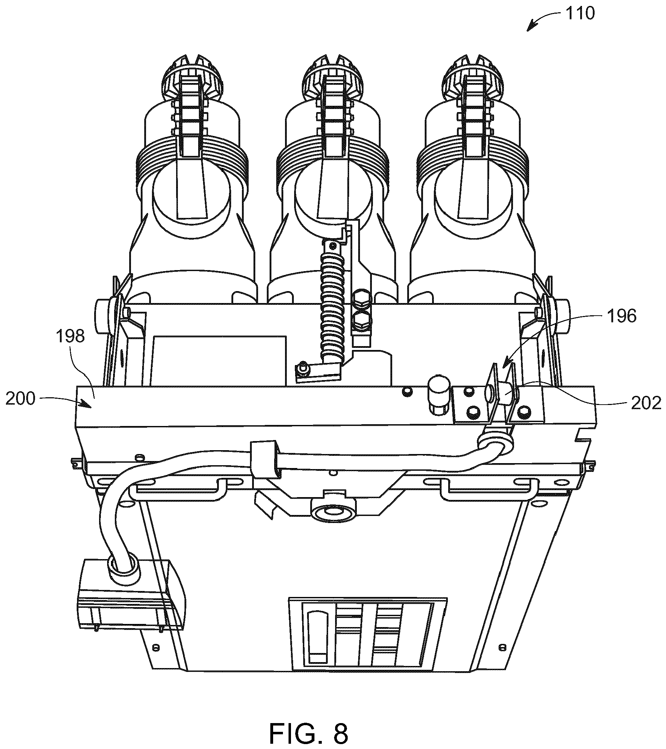

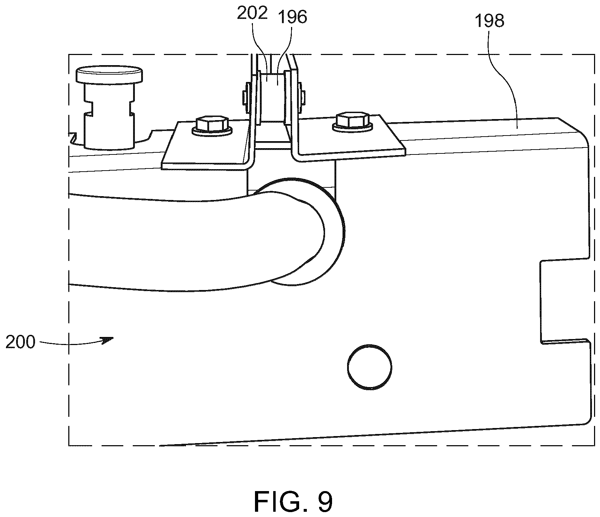

Referring to FIG. 8 and FIG. 9, for lifting or positioning the bracket 166 to the first position and the second position, the circuit breaker 110 may include an engagement structure 196 extending upwardly from an upper end 198 of a frame 200 of the circuit breaker 110. The engagement structure 196 of the indicator assembly 160 is adapted to contact or abut the edge 182 upon an insertion of the circuit breaker 110 inside the housing 104 and is adapted move along the edge 182 and in abutment with the edge182 upon a further or subsequent insertion of the circuit breaker 110 inside the housing 104. The engagement structure 196 is adapted to lift the bracket 166 in response to a contact or engagement with the first longitudinal end 178 of the plate 168. As the engagement structure 196 moves in a lateral direction towards the intermediate wall 142 or the first lateral end 172 along the edge 182, the bracket 166 pivots about the pivot axis 170 and moves (i.e. lift) upwardly towards the roof 130 to the first position (as shown in FIG. 5). In so doing, at first, the first marking 162 is displayed through the display window 140 indicating a positioning of the circuit breaker 110 corresponding to the test position. Upon subsequent lifting of the bracket 166 due to further sliding of the circuit breaker 110 towards the partition wall 114, the second marking 164 is displayed through the display window 140 indicating that the circuit breaker 110 is arranged at the service position (shown in FIG. 6). Accordingly, the indicator assembly 160 (i.e. the switchgear assembly 100) facilitates in displaying the position of the circuit breaker 110 inside the housing 104, and therefore ensures a safety of the operator. Also, the indicator assembly 160 being a mechanical assembly provides a cost-effective mechanism to indicate the position of the circuit breaker 110.In an embodiment, the engagement structure 196 may be a roller 202 adapted to roll in response to an engagement with the convex edge 182 and the sliding movement of the circuit breaker 110 inside the housing 104. Although the engagement structure 196 is contemplated as the roller 202, it may be envisioned that the engagement structure 196 may be any protrusion extending from the upper end 198 of the frame 200 of the circuit breaker 110.

In certain implementations, referring again to FIG. 4, the switchgear assembly 100 may include a guide member 210 attached to the housing 104 and adapted to guide the pivotal movement of the bracket 166 (i.e. the plate 168). As shown, the guide member 210 may be attached or coupled to the intermediate plate roof 131, may be disposed inside the first chamber 146. In some embodiments, the intermediate roof plate 131 may be omitted, and in such cases, the guide member 210 may be attached to the roof 130. In an exemplary embodiment, the guide member 210 may be an inverted U-shaped bracket 212 having a base 214 connected to the intermediate roof plate 131, and a pair of elongated plates, for example, a first elongated plate 216 and a second elongated plate 218, extending downwardly from the base 214 towards the base 122 of the housing 104. The first elongated plate 216 defines a first slot 220 that may extend from a free end of the first elongated plate 216 towards the base 214 and is adapted to receive a portion of the plate 168 (i.e. the bracket 166) to guide the vertical movement of the plate 168 (i.e. the bracket 166). Similar to the first elongated plate 216, the second elongated plate 218 defines a second slot 222 that may extend from a free end of the second elongated plate 218 towards the base 214 and is adapted to receive a portion of the plate 168 (i.e. the bracket 166) to guide the vertical movement of the plate 168 (i.e. the bracket 166). Further, as shown, the second elongated plate 218 is disposed spaced apart from the first elongated plate 216 and extends substantially parallel to the first elongated plate 216. Although the guide member 210 is contemplated as the inverted U-shaped bracket 212 having two elongated plates 216, 218, it may be envisioned that the guide member 210 may include a single elongated plate extending downwardly from the roof 130 or the intermediate roof plate 131 and having a single slot to receive a portion of the plate 168 (i.e. the bracket 166) to guide the movement of the bracket 166.

Many modifications and other embodiments of the disclosures set forth herein will come to mind to one skilled in the art to which these disclosures pertain having the benefit of the teachings presented in the foregoing descriptions and the associated drawings. Therefore, it is to be understood that the disclosures are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A switchgear assembly, comprising:
a switchgear panel having
a housing defining a display window, and
a bracket disposed inside the housing and pivotably coupled to the housing and including a first marking and a second marking; and
a circuit breaker adapted to be slidably received inside the housing and including an engagement structure adapted to engage with bracket to pivot the bracket to the first position upon an insertion of the circuit breaker inside the housing and to the second position in response to the subsequent insertion and sliding of the circuit breaker inside the housing, wherein
in the first position, the first marking is displayed through the display window indicating a test position of the circuit breaker, and
in the second position, the second marking is displayed through the display window indicating a service position of the circuit breaker.

2. The switchgear assembly as claimed in claim 1, wherein the bracket includes a substantially convex edge adapted to engage with the engagement structure, wherein the bracket pivots towards the second position in response to a movement of the engagement structure along the convex edge in a lateral direction.

3. The switchgear assembly as claimed in any preceding claim, wherein the engagement structure includes a roller.

4. The switchgear assembly as claimed in any preceding claim, wherein the bracket includes a protrusion adapted to engage with a wall of the housing to restrict a movement of the bracket in a second direction, wherein in the second direction the bracket moves towards the first position from the second position.

5. The switchgear assembly as claimed in claim 4, wherein the protrusion is disposed proximate to a first longitudinal end of the bracket.

6. The switchgear assembly as claimed in claim 1, wherein the first marking is disposed proximate to a roof of the housing relative the second marking.

7. The switchgear assembly as claimed in any preceding claim further including a guide member attached to the housing and adapted to guide the movement of the bracket.

8. The switchgear assembly as claimed in claim 7, wherein the guide member includes at least one slot adapted to receive a portion of the bracket to guide the movement of the bracket.

9. The switchgear assembly as claimed in claim 7, wherein the guide member is an inverted U-shaped bracket having a first elongated plate defining a first slot and a second elongated plate disposed substantially parallel to the first elongated plate and defining a second slot, wherein the first slot and the second slot receive a portion of the bracket to guide the movement of the bracket.

10. The switchgear assembly as claimed in any preceding claim, wherein the circuit breaker is vacuum circuit breaker.
